# EUROPEAN PATENT APPLICATION

(11) **EP 3 525 358 A1**
(43) Date of publication of application: **14.08.2019**
(21) Application number: 19154734.8
(22) Date of filing: 31.01.2019
(51) Int. Cl.: H04B 7/022, H04B 7/0404, H04B 7/06

(54) **RADIO COMMUNICATION SYSTEM, RADIO COMMUNICATION CONTROL METHOD, MOBILE TERMINAL APPARATUS, BASE STATION APPARATUS, AND CONTROL APPARATUS**

(30) Priority: 07.02.2018 JP 2018020328
(71) Applicant: Panasonic Intellectual Property Corporation of America, Torrance, CA 90503 (US)
(72) Inventor: TAKINAMI, Koji, Osaka-shi, Osaka 540-6207 (JP); SHIRAKATA, Naganori, Osaka-shi, Osaka 540-6207 (JP); URUSHIHARA, Tomoya, Osaka-shi, Osaka 540-6207 (JP); KOBAYASHI, Masashi, Osaka-shi, Osaka 540-6207 (JP)
(74) Representative: Grünecker Patent- und Rechtsanwälte PartG mbB

(57) **Abstract**

A radio communication system includes: a mobile terminal apparatus that is capable of establishing a plurality of radio links that are shared in a time-division scheme; a plurality of base station apparatuses each of which establishes one radio link with the mobile terminal apparatus; and a control apparatus that selects, from among the plurality of radio links established, a data link that is used for data communication. The mobile terminal apparatus, using the data link selected, performs the data communication with one of the plurality of base station apparatus establishing the data link.

## Description

### BACKGROUND

### 1. Technical Field

The present disclosure relates to a radio communication system, a radio communication control method, a mobile terminal apparatus, a base station apparatus, and a control apparatus.

### 2. Description of the Related Art

A wireless LAN (local area network) system is constituted by an aggregate of a plurality of basic service units in each of which a plurality of mobile stations (mobile terminal apparatuses) and one base station (base station apparatus) perform mobile station-base station communication on a specific frequency.

The mobile stations are assigned roles as stations (STAs), and the base station is assigned a role as an access point (AP). The mobile stations have a function of establishing a radio link with one AP. Meanwhile, the base station has a function of establishing radio links with the plurality of STAs.

The plurality of STAs connect to the AP, for example, under a signal collision avoidance scheme called CSMA/CA. The term "CSMA/CA" is an abbreviation for "Carrier Sense Multiple Access/Collision Avoidance".

The wireless LAN system is configured such that in a case where the communication (i.e. radio link) between an STA and the AP is disconnected, the STA performs a rescanning process to search for another AP with which it is able to establish a radio link, and performs switching of destination APs (i.e. a handover).

Japanese Unexamined Patent Application Publication No. 2005-175932 is an example of related art.

### SUMMARY

As mentioned above, since the wireless LAN system is configured such that a rescanning process is performed in a case where a disconnection from the communication with the AP has been detected in an STA, the STA continues to be disconnected from the communication until completion of a handover. In other words, the wireless LAN system does not support a soft handover.

One non-limiting and exemplary embodiment provides a radio communication system in which a mobile terminal apparatus performs an interbase station apparatus handover with reduced occurrence of a communication disconnect.

In one general aspect, the techniques disclosed here feature a radio communication system including: a mobile terminal apparatus that is capable of establishing a plurality of radio links that are shared in a time-division scheme; a plurality of base station apparatuses each of which establishes one radio link with the mobile terminal apparatus; and a control apparatus that selects, from among the plurality of radio links established, a data link that is used for data communication, wherein the mobile terminal apparatus, using the data link selected, performs the data communication with one of the plurality of base station apparatus establishing the data link.

An aspect of the present disclosure makes it possible to achieve a radio communication system in which a mobile terminal apparatus performs an interbase station apparatus handover with reduced occurrence of a communication disconnect.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a block diagram showing an example configuration of a wireless LAN system according to an embodiment;
Fig. 2 is a diagram showing an example operation during which a beacon is received from a mobile station in the wireless LAN system according to the embodiment;
Fig. 3 is a diagram showing an example operation of beam training of base stations in the wireless LAN system according to the embodiment;
Fig. 4 is a diagram showing examples of a state of establishment of radio links in the wireless LAN system according to the embodiment;
Fig. 5 is a flow chart showing an example of a process for establishing radio links and an example of a process for selecting a radio link that is used for data communication according to the embodiment;
Fig. 6 is a flow chart showing another example of the process for establishing radio links and another example of the process for selecting a radio link that is used for data communication according to the embodiment;
Fig. 7 is a flow chart showing an example of a radio link quality monitoring process and an example of a radio link updating process according to the embodiment;
Fig. 8 is a diagram showing an example of a state of establishment of radio links in a case where the mobile station has moved in the wireless LAN system according to the embodiment;
Fig. 9 is a diagram showing an example of a state of establishment of radio links in a case where two mobile stations are present in a wireless LAN system according to a modification of the embodiment;
Fig. 10 is a diagram showing an example in which redundancy has been imparted to data links in the wireless LAN system according to the modification of the embodiment;
Fig. 11 is a flow chart showing an example of data processing according to the modification of the embodiment;
Fig. 12 is a diagram chronologically showing an example of transmission of packet data according to the modification of the embodiment; and
Fig. 13 is a block diagram showing an example configuration of a wireless LAN system according to a comparative example.

### DETAILED DESCRIPTION

An embodiment of the present disclosure is described below as appropriate with reference to the drawings. Note, however, that an unnecessarily detailed description may be omitted. For example, a detailed description of a matter that is already well known and a redundant description of substantially the same components may be omitted. This is intended to prevent the following description from becoming unnecessarily redundant and facilitate understanding of persons skilled in the art.

It should be noted that the accompanying drawings and the following description are provided for persons skilled in the art to fully understand the present disclosure but are not intended to limit the subject matter recited in the claims.

Further, in each of the accompanying drawings, a common constituent element is given an identical sign. In each of the accompanying drawings, elements of the same sort are described in distinction from each other by using reference signs obtained by adding letters of the alphabet, such as "... 102A" and "... 102B", and elements of the same sort are described without distinction by using reference signs not including letters of the alphabet, such as "... 102".

First, a handover is described.

In order to reduce the occurrence of a communication disconnect that is entailed by a handover, a technique has been studied by which an STA is mounted with a plurality of transceiver-receivers and radio links are established in advance with a plurality of APs that are present around the STA. However, this technique, by which an STA is mounted with a plurality of transceiver-receivers, may increase, for example, the cost, size, and/or power consumption of the STA.

Further, a technique has been studied by which each of a plurality of STAs performs a scanning process in advance in preparation for a communication disconnect. For example, in a case where the received signal level of a radio link has become smaller than a threshold, the STA performs a scanning process in advance in a time-division scheme before the radio link is disconnected. However, since the STA performs an authentication procedure with a new destination AP after having switched destination APs, a communication disconnect occurs.

The occurrence of such a communication disconnect can be a factor that causes a disturbance in a reproduced image, for example, during low-delay video transmission or the like. Further, in a case where the STA, which is a mobile station, moves at high speed or in a millimeter-wave high-speed wireless LAN system (e.g. IEEE802.11ad/ay), the frequency of occurrence of a communication disconnect may increase, as the communication distance tends to be shorter and the directivity tends to be higher than those of a micrometer-wave system. Configuration of Wireless LAN System and Process for Establishing Radio Link

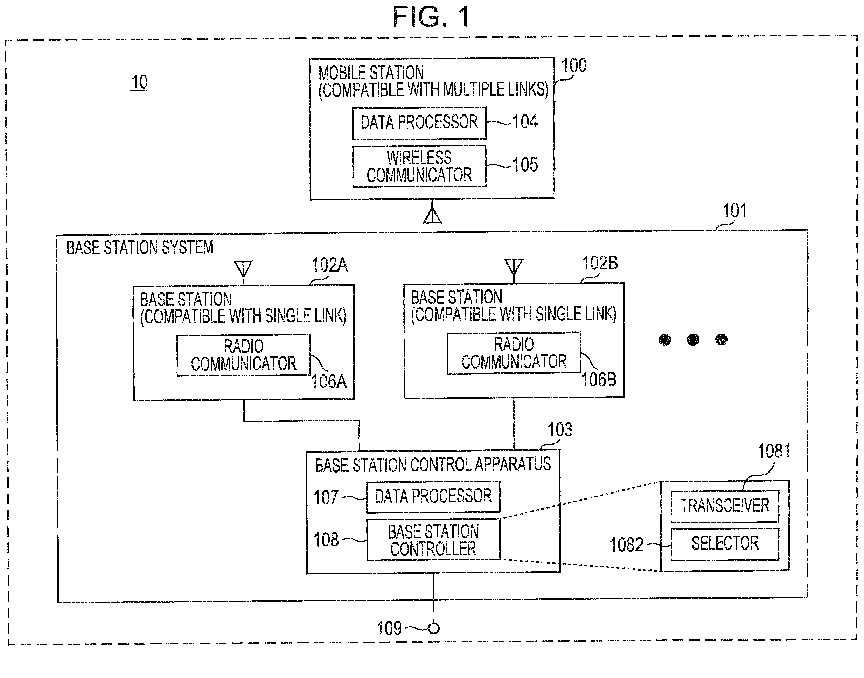

Fig. 1 is a block diagram showing an example configuration of a wireless LAN system 10 according to an embodiment. The wireless LAN system 10 may adopt, for example, a communication protocol conforming with (or based on) a wireless LAN-related standards such as IEEE802.11b/g/a/n/ac/ad/ay.

As shown in Fig. 1, the wireless LAN system 10 illustratively includes a mobile station 100 and a base station system 101.

The base station system 101 includes, for example, a plurality of base stations 102A, 102B, and ... and a base station control apparatus 103. It should be noted that the following description sometimes refers to the plurality of base stations 102A, 102B, and ... as "base station A", "base station B", and the like with the reference numeral "102" omitted therefrom.

The base station control apparatus 103 and each of the plurality of base stations 102 may be connected to each other using either/both a wired interface or/and a wireless interface. An non-limiting example of a wired interface that may be applied is an Ethernet (registered trademark) cable or an optical fiber cable. An wireless interface that may be applied is an interface that is capable of communication equivalent to that which involves the use of a wired interface.

The mobile station 100 illustratively performs radio communication with any of the plurality of base stations 102. The mobile station 100 may fall under the category of mobile terminals such as cellular phones or may fall under the category of wireless applications mounted on moving bodies such as drones, automobiles, and trains.

The mobile station 100 illustratively includes a data processor (data processing circuit) 104 and a wireless communicator (radio communication circuit) 105. The data processor 104 for example processes signals that are transmitted and received via the wireless communicator 105 in radio communication with any one or more of the plurality of base stations 102.

Types of signal may include, for example, data signals, control signals, beacon signals, and training signals. For example, a signal (uplink) that is transmitted from the mobile station 100 toward the base station system 101 (i.e. any of the plurality of base stations 102) may contain video data captured by a camera mounted on the mobile station 100.

Further, a signal (uplink) that is transmitted from the base station system 101 toward the mobile station 100 may contain, for example, a control signal for controlling how the mobile station 100 operates. Examples of beacon signals and training signals will be described later.

The wireless communicator 105 of the mobile station 100 establishes one or more radio links with any one or more of the plurality of base stations 102 and transmits and receives signals via at least one of the radio links thus established. That is, since the wireless communicator 105 of the mobile station 100 has a function which is similar to that of an AP, it is capable of establishing a plurality of radio links and can establish a radio link with one or more base stations 102.

Each of the plurality of base stations 102 illustratively includes a wireless communicator (radio communication circuit) 106. The wireless communicator 106 for example establishes a radio link with the mobile station 100 and transmits and receives signals via the radio link thus established. Further, the wireless communicator 106 receives a signal and transmits the signal to the base station control apparatus 103. Meanwhile, the wireless communicator 106 receives a signal directed to the base station 100 from the base station control apparatus 103 and transmits the signal to the mobile station 100 through the radio link thus established. In the present embodiment, the wireless communicator 106 of each of the plurality of base stations 102 is capable of establishing a single link like an STA and establishes a radio link with one mobile station 100.

In this way, one or more radio links are established between the wireless communicator 105 of one mobile station 100 and the wireless communicator(s) 106 of any one or more of the plurality of base stations 102, and signals are transmitted and received through at least one of the radio links thus established.

Further, in the base station system 101, the base station control apparatus 103 includes a data processor (data processing circuit) 107 and a base station controller (base station control circuit) 108.

The data processor 107 for example processes a data signal inputted from any base station 102 and processes a data signal that is outputted to any base station 102. Further, a data signal that is inputted from a base station 102 is for example a data signal that the mobile station 100 has outputted. Further, a data signal that is outputted to a base station 102 is a data signal directed to the base station 100.

The base station controller 108 performs control such as the selection from among the plurality of base stations 102 of a base station 102 with which to establish a radio link and the selection from among the plurality of base stations 102 of a base station 102 that is used for transmission of a data signal (i.e. data communication). It should be noted the "selection of a base station 102 that is used for transmission of a data signal" may be construed as the "selection of a radio link that is used for data communication".

The base station controller 108 may illustratively include a transceiver (transmitting circuit) 1081 and a selector (selection circuit) 1082. The transceiver 1081 transmits to the plurality of base stations 102 an instruction to establish with the mobile station 100 one of a plurality of radio links that are shared in a time-division scheme.

The selector 1082 selects, from among the plurality of radio links established at the instruction of the transceiver 1081, a radio link that is used for data communication (hereinafter sometimes referred to as "data link"). The data processor 107 processes a data signal of data communication that is performed using the data link thus selected between the mobile station 100 and a base station 102 that has established the data link.

It should be noted that in Fig. 1, the sign 109 denotes an input-output terminal of the base station controller 108. The base station controller 108 sends and receives data signals to and from an external network such as a backbone network (also sometimes referred to as "core network") via the input-output terminal 109.

In Fig. 1, the mobile station 100 establishes radio links with two or more base stations 102 by connecting to them, respectively, as the mobile station 100 has a function which is similar to that of an access point (AP) of wireless LAN technology. That is, the mobile station 100 is capable of establishing a plurality of radio links.

Meanwhile, each of the base stations 102 establishes one radio link with one mobile station 100, as it has a function which is similar to that of a station (STA) of wireless LAN technology. That is, each of the base stations 102 is capable of establishing a single radio link.

Accordingly, a plurality of radio links are established between the mobile station 100, which operates as an AP, and the plurality of base stations 102, which operate as STAs.

Thus, in the present embodiment, the mobile station 100 is assigned a role as an AP, and each of the base stations 102 is assigned a role as an STA. Therefore, the mobile station 100 may be read as "AP 100", and each of the base stations 102 may be read as "STA 102".

The plurality of radio links established between the mobile station 100 and the plurality of base stations 102 are for example shared in a time-division scheme under a multiple (or multi-way) access scheme based on CSMA/CA.

For example, the mobile station 100 multiplexes a plurality of radio links of the same frequency (i.e. frequency channels) in a time-division scheme and communicates with any of the plurality of base stations 102.

Meanwhile, in a case of transmitting a signal to the mobile station 100, each of the plurality of base stations 102 performs carrier sense of an established radio link and, in a case where no busy state is detected, transmits a signal to the established radio link.

It should be noted that the "multiple (or multi-way) access scheme based on CSMA/CA" is hereinafter sometimes abbreviated as "CSMA access scheme" for descriptive purposes.

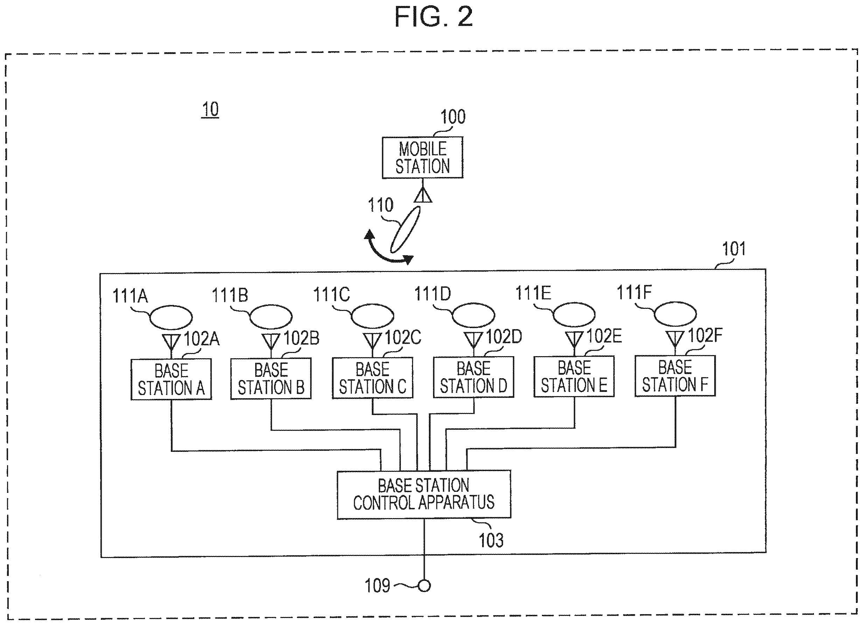

In the following, an example of operation of the wireless LAN system 10 according to the present embodiment is described with reference to Figs. 2, 3, and 4. It should be noted that Figs. 2, 3, and 4 show examples in which the base station system 101 includes six base stations 102A, 102B, 102C, 102D, 102E, and 102F.

Further, a case is described where a drone is used as a non-limiting example of the mobile station 100. Furthermore, a case is described where a millimeter-wave band (60 GHz band) of radio waves is used as a non-limiting example in radio communication between the mobile station 100 and each of the base stations 102. Further, a case is described where the mobile station 100 and each of the plurality of base stations 102 have a beamforming function of scanning the directivity of a radio wave (i.e. the antenna direction of a directional antenna).

Fig. 2 shows a state where radio links are yet to be established between the mobile station 100 and the base stations A, B, C, D, E, and F.

The mobile station 100 for example periodically transmits a beacon signal 110 while scanning the antenna direction. Meanwhile, the base stations A, B, C, D, E, and F wait to receive the beacon signal 110 through antenna patterns 111A, 111B, 111C, 111D, 111E, and 111F, respectively, whose beam widths are defined in a quasi-omni scheme.

In a case where the beacon signal has been received by one or more of the base stations A, B, C, D, E, and F, a result of reception of the beacon signal (hereinafter sometimes abbreviated as "beacon reception result") is notified (or reported) to the base station control apparatus 103.

The beacon reception result may contain information (or an index) indicating the reception quality of the beacon signal (hereinafter sometimes abbreviated as "beacon reception quality"). Non-limiting examples of the information indicating a beacon reception quality include the received power of the beacon signal and a received signal strength indicator (RSSI).

The base station control apparatus 103 uses, for example, the base station controller 108 to, on the basis of the beacon reception result thus notified, select, from among the base stations A, B, C, D, E, and F, a base station 102 that establishes a radio link with the mobile station 100.

For example, in a case where the beacon reception qualities of four of the six base stations A, B, C, D, E, and F, namely the base stations B, C, D, and E, are equal to or higher than a predetermined quality and good, the base station control apparatus 103 selects the base stations B, C, D, and E.

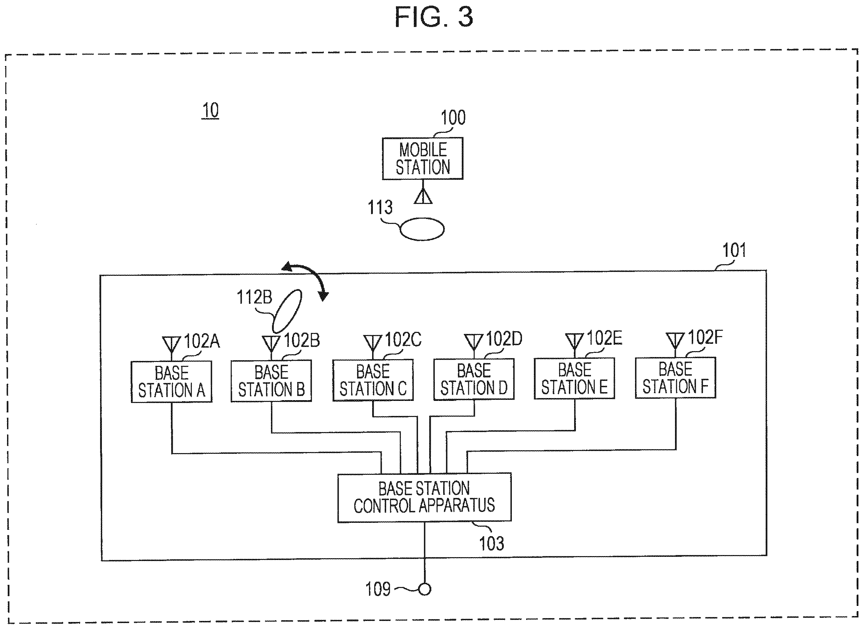

The following describes an example of a beam training process of a base station 102 with reference to Fig. 3. It should be noted that a beam training process of a base station 102 may be controlled by the base station control apparatus 103.

As shown in Fig. 3, with attention paid to a beam training process of the base station B, the base station B scans the direction of a beam 112B and transmits a training signal.

Meanwhile, the base station 100 waits to receive, through an antenna pattern 113 whose beam width is defined in a quasi-omni scheme, the training signal that is transmitted from the base station B.

On the other base stations C, D, and E, too, beam training processes are performed in a scheme similar to that which is performed on the base station B.

Upon completion of the beam training processes of the base stations B, C, D, and E, each of the base stations B, C, D, and E transmits a connection request for a radio link to the mobile station 100, for example, in accordance with control (or an instruction) from the base station control apparatus 103.

By the mobile station 100 receiving a connection request transmitted by a base station 102, a process (or procedure) for establishing a radio link between the mobile station 100 and the base station 102 from which the connection request has been transmitted is executed.

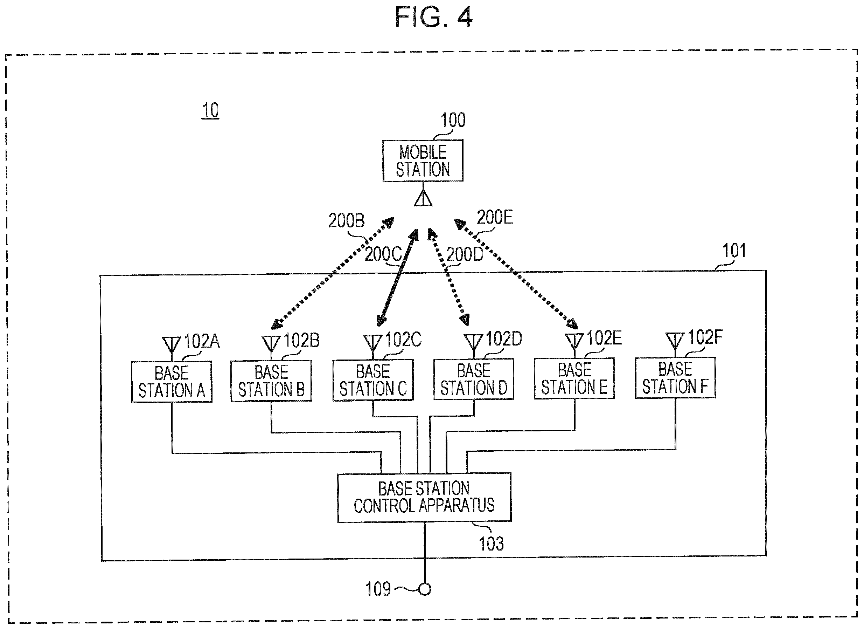

For example, as shown in Fig. 4, assume a case where radio links 200B, 200C, 200D, and 200E have been established between the mobile station 100 and the base stations B, C, D, and E, respectively. In this case, the base station control apparatus 103 selects one or more data links from among the radio links 200B, 200C, 200D, and 200E thus established.

It should be noted that in a case where the radio links 200B, 200C, 200D, and 200E are described without distinction, they are described as "radio links 200" with the letters of the alphabet omitted therefrom.

A criterion for the selection of a radio link may involve the use of information (or an index) indicating the communication quality of a radio link at a base station 102 (hereinafter sometimes referred to as "radio link quality"). Non-limiting examples of the information or index indicating a radio link quality include a signal received power, an RSSI, an error rate, and a modulation and coding scheme (MCS). A criterion for the selection of a radio link 200 may involve the use of one or more selected from among these pieces of information or indices.

For example, the base station control apparatus 103 selects as a data link(s) one or more radio links of the radio links 200B, 200C, 200D, and 200E whose qualities are equal to or higher than the predetermined quality. It should be noted that "selecting a data link" may be read as "allocating a selected radio link to data communication".

For example, in a case where the quality of the radio link 200C of the radio links 200B, 200C, 200D, and 200E thus established is equal to or higher than the predetermined quality in Fig. 4, the base station control apparatus 103 allocates the radio link 200C, which is indicated by a solid line, to a data link.

It should be noted that the radio links 200B, 200C, 200D, and 200E established between the mobile station 100 and the base stations B, C, D, and E, respectively, are for example shared in a time-division scheme among the base stations B, C, D, and E under the CSMA access scheme.

For example, in a case of performing a downlink transmission (e.g. a control data transmission) directed to the mobile station 100, each of the base stations 102 performs carrier sense on the radio link 200 thus established and, in a case where no busy state is detected, performs the downlink transmission directed to the mobile station 100.

For uplink and downlink data communication, the radio link 200C, which has been selected as a data link, of the radio links 200B, 200C, 200D, and 200E thus established, is used.

### Establishment of Radio Link and Selection of Data Link

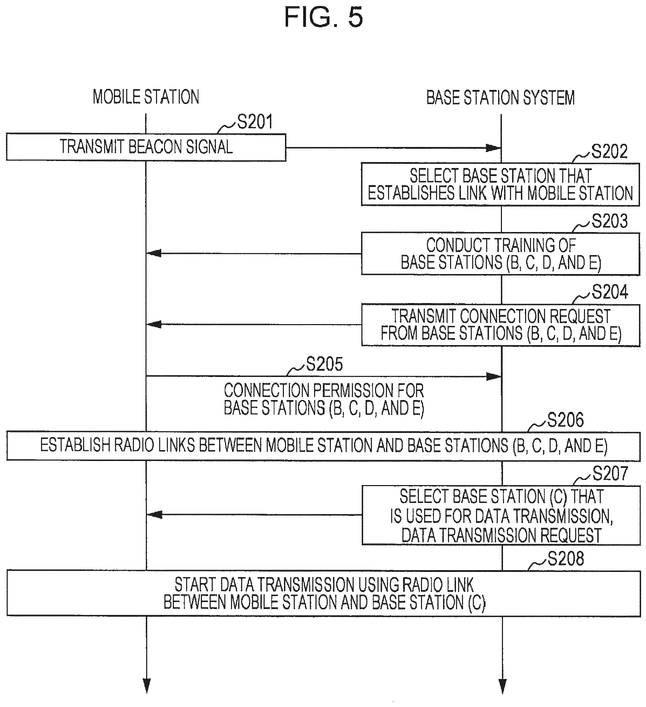

The example of operation described above with reference to Figs. 1 to 4 is illustrated with reference to a flow chart of Fig. 5.

As shown in Fig. 5, the mobile station 100 transmits a beacon signal (S201).

The base station control apparatus 103 (e.g. the base station controller 108) selects, on the basis of beacon reception qualities reported from base stations 102 that have received the beacon signal, base stations 102 (B, C, D, and E) that establish radio links with the mobile station 100 (S202).

After that, the base station control apparatus 103 instructs each of the base stations B, C, D and E thus selected to conduct a beam training process. This causes a beam training process to be performed between the mobile station 100 and each of the base stations B, C, D, and E (S203).

After the beam training process, the base station control apparatus 103 for example instructs each of the base stations B, C, D, and E to transmit a connection request to the mobile station 100. Each of the base stations B, C, D, and E thus instructed transmits a connection request to the mobile station 100 (S204).

In a case of permitting the connection request, the mobile station 100 transmits a connection permission to the base station 102 from which the connection request has been transmitted (S205). By each of the base stations B, C, D, and E receiving the connection permission from the mobile station 100, the radio links 200B, 200C, 200D, and 200E are established between the mobile station 100 and the base stations B, C, D, and E, respectively, as illustrated in Fig. 4 (S206).

After the establishment of the radio links 200B, 200C, 200D, and 200E, the base station control apparatus 103 for example selects, on the basis of the signal reception qualities of the base stations B, C, D, and E, the base station C that is used for data communication. It should be noted that "selecting the base station C" may be read as "selecting the radio link 200C corresponding to the base station 102C". Further, the base station control apparatus 103 notifies the mobile station 100 of selection information (base station C) of the base station that is used for data communication, and requests the start of data communication (S207). For the notification from the base station control apparatus 103 to the mobile station 100, the radio link 200C of the base station C that is used for data communication is typically used, although any of the radio links 200B, 200C, 200D, and 200E can be used.

Upon receiving the request, the base station C performs data communication with the mobile station 100 using the radio link 200C established between the base station 102C and the mobile station 100 (S208).

It should be noted that various control signals such as an acknowledgment (ACK/NACK) signal in response to a data signal may be bidirectionally transmitted and received between the mobile station 100 and the base station 102C. Fig. 5 omits to illustrate a process for transmitting and receiving control signals.

Further, S201 of Fig. 5 may be thought of as being equivalent to a timing of attention paid to one transmission period in a case where the mobile station 100 periodically transmits a beacon signal. Each of the intervals at which beacon signals are transmitted is called a beacon interval, and step S202 of Fig. 5 and its subsequent steps may be executed over a plurality of beacon intervals.

Further, the flow chart shown in Fig. 5 is an example, and unless a contradiction arises, the order of the steps may be rearranged or some of the steps may be omitted. For example, after the beam training process of each base station 102 in the base station system 101, the selection of a base station 102 that establishes a radio link with the mobile station 100 may be made. Further, for example, in a case where a relative positional relationship between the mobile station 100 and each base station 102 can be identified on the basis of positional information of the mobile station 100 or the like, the beam training process may be omitted.

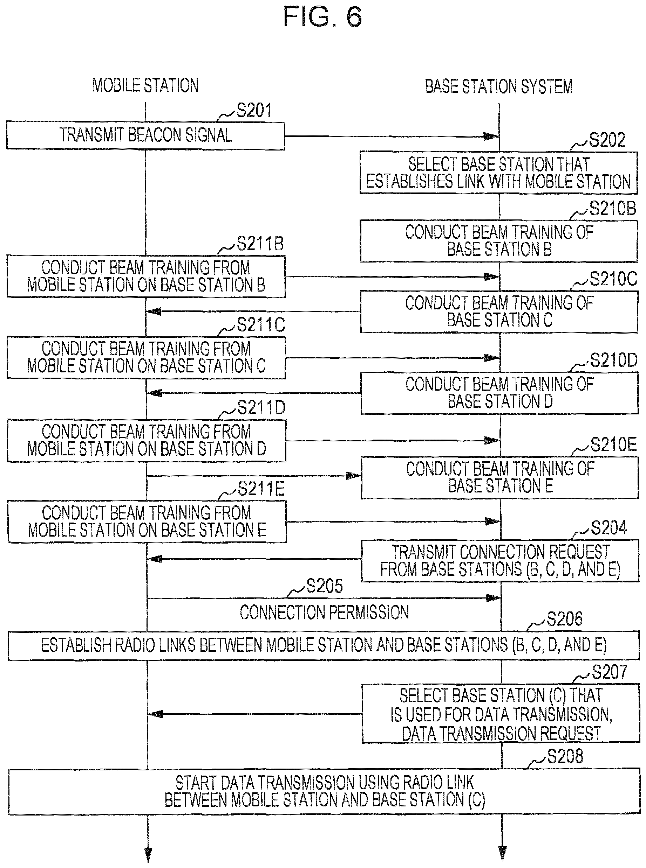

Further, each individual step illustrated in Fig. 5 may be divided into a plurality of steps, and the plurality of steps thus divided may be executed in parallel or may be executed in order. For example, some or all of the beam training processes of the base stations 102 (S203), the connection request (S204), and the connection permission (S205) may be executed in parallel for the plurality of base stations 102 selected in step S202 or may be executed in order as will be described later with reference to Fig. 6. The order of execution may be determined according to a predetermined rule or may be determined at random.

Further, a step other than those illustrated in Fig. 5 may be added. For example, between the transmission of a beacon signal (S201) and the establishment of the radio links (S206), the mobile station 100 may perform beam training processes on the base stations 102 apart from the beam training processes of the base stations 102 (S203). It should be noted that an example of the beam training processes that the mobile station 100 performs on the base stations 102 will be described later with reference to Fig. 6.

### Modifications of Establishment of Radio Link and Selection of Data Link

Fig. 6 is a flow chart that is equivalent of a modification of the flow chart illustrated in Fig. 5. Steps in Fig. 6 given the same signs as those illustrated in Fig. 5 may be thought of as being steps which are the same as or similar to those described with reference to Fig. 5.

In Fig. 6, the respective beam training processes (S210B, S210C, S210D, and S210E) of the base stations B, C, D, and E are executed in order in the order of the base stations B, C, D, and E.

Further, in Fig. 6, beam training processes (S211B, S211C, S211D, and S211E) that the mobile station 100 performs on the base stations B, C, D, and E, respectively, are executed in order in the order of the base stations B, C, D, and E.

It should be noted that the beam training processes (S211B, S211C, S211D, and S211E) that the mobile station 100 performs on the base stations B, C, D, and E, respectively, may be executed, for example, in accordance with a procedure similar to the beam training process, described with reference to Fig. 2, which involves the use of a beacon signal.

Further, in Fig. 6, the order of the beam training processes (S210B, S210C, S210D, and S210E) of the base stations B, C, D, and E may be mutually rearranged. For example, the beam training processes of the base stations B, C, D, and E may be executed in a random order.

Similarly, the order of the beam training processes (S211B, S211C, S211D, and S211E) that the mobile station 100 performs on the base stations B, C, D, and E, respectively, may be mutually rearranged. For example, the beam training processes may be executed in a random order on the base stations B, C, D, and E, respectively.

By the mobile station 100 thus performing the beam training processes (S211B, S211C, S211D, and S211E) on the base stations B, C, D, and E, respectively, the accuracy of beam training can be improved as compared with the case of Fig. 5.

This makes it possible, for example, to increase a success rate of reception at a destination of the already-described connection request (S204) and connection permission (S205). This in turn makes it possible to increase a success rate of establishment of a radio link 200 between the mobile station 100 and each of the base stations B, C, D, and E.

### Monitoring and Updating of Radio Link

After the establishment of a radio link, the base station control apparatus 103 (e.g. the base station controller 108) may periodically (or aperiodically) monitor the communication quality of the radio link thus established (hereinafter sometimes abbreviated as "radio link quality").

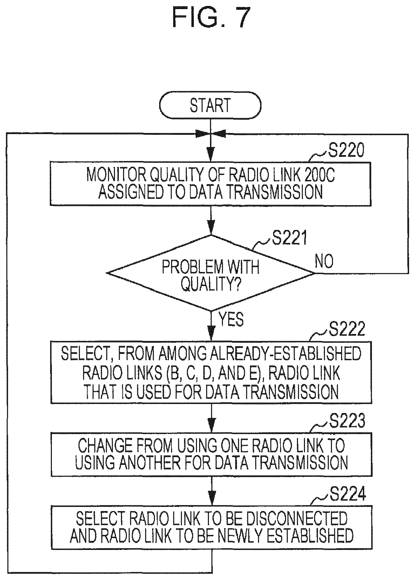

Fig. 7 is a flow chart showing an example of a process for monitoring a radio link quality and a process for updating a radio link.

As shown in Fig. 7, the base station control apparatus 103 monitors the quality of a data link between a base station 102 and the mobile station 100 (S220). The quality of a data link that is monitored may for example be any one of the already-described signal received power, RSSI, error rate, and MCS.

The base station control apparatus 103 determines, as a result of the monitoring, whether there is a problem with the quality of the data link (S221). For example, in a case where the base station control apparatus 103 has determined that the quality of the data link monitored is equal to or higher than a preset quality (i.e. has no problem) (NO in S221), the base station control apparatus 103 returns to S220 to continue monitoring the quality of the data link.

On the other hand, in a case where the base station control apparatus 103 has determined that the quality of the data link monitored is lower than the preset quality (i.e. has a problem) (YES in S221), the base station control apparatus 103 selects, from among a plurality of already-established radio links, a destination to which switching is made from the data link (S222). It should be noted that the plurality of radio links that have already been established may be thought of as being equivalent to candidates for the destination to which switching is made from the data link.

For example, in a case where it has been determined that the quality of the data link 200C is lower than the preset quality, one or more radio links to which switching is made from the data link 200C is/are selected from among the other already-established radio links 200B, 200D, and 200E.

As with the selection criterion used for the selection of the data link 200C, a criterion for the selection of the destination to which switching is made from the data link 200C may involve the use of one or more selected from among a signal received power, an RSSI, an error rate, and an MCS.

For example, assume a case in Fig. 4 where the quality of the radio link 200D of the radio links 200B, 200D, and 200E serving as candidates for the destination to which switching is made from the data link 200C is equal to or higher than the predetermined quality. In this case, the base station control apparatus 103 selects the radio link 200D as the destination to which switching is made from the data link 200C.

After the selection of the radio link 200D, the base station control apparatus 103 performs a process for changing (i.e. switching) from the data link 200C to the newly-selected radio link 200D (S223).

For example, the base station control apparatus 103 (e.g. the base station controller 108) notifies the mobile station 100 of a control signal for switching from the data link 200C to the data link 200D. The mobile station 100 conducts data communication with the data link switched from the radio link 200C to the radio link 200D.

The present embodiment, in which the mobile station 100 selects another link from among the plurality of already-established radio links, makes it possible to reduce the occurrence of a communication disconnect due to switching from one data link to another.

It should be noted that the base station control apparatus 103 for example selects a base station 102 that newly establishes a radio link with the mobile station 100 (S224). For example, with the establishment of the data link 200D maintained, the base station control apparatus 103 executes step S201 illustrated in Fig. 5 or 6 and its subsequent steps and step S206 illustrated in Fig. 5 or 6 and its preceding steps. In a case of using a newly-established radio link for data communication, the base station control apparatus 103 notifies the mobile station 100 of selection information of the base station 102 that is used for data communication, and requests the start of data communication. For the notification from the base station control apparatus 103 to the mobile station 100, that one of the already-established radio links 200 which belongs to the base station 102 that is used for data communication may be used. It should be noted that one of the already-established radio links that was not selected as a radio link to be newly established may be disconnected.

After step S224, the base station control apparatus 103 may return to step S220 to repeatedly execute steps S220 to S224.

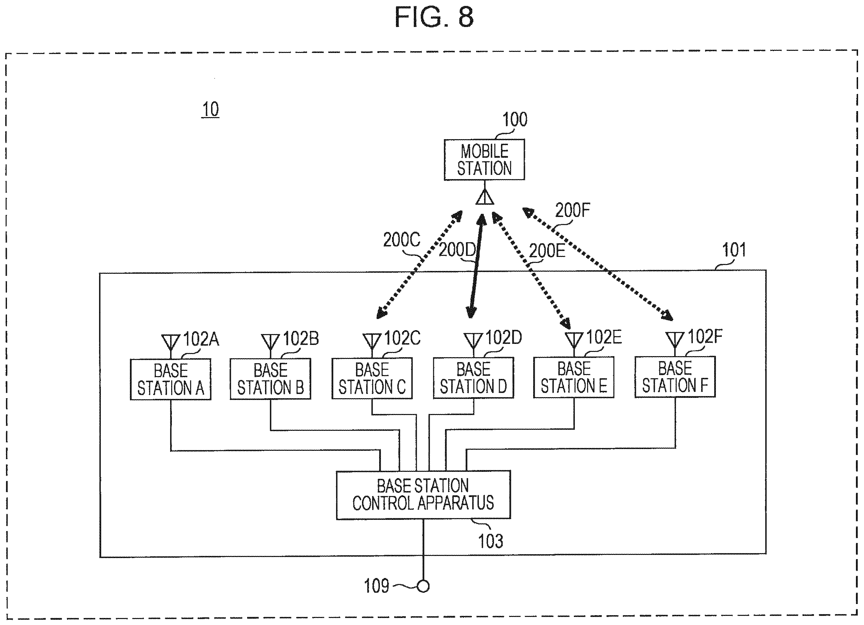

Fig. 8 shows a state where the data link has been switched from the radio link 200C to the radio link 200D. Fig. 8 shows a case where the mobile station 100 moves in a direction from the base station A toward the base station F. Although Fig. 8 shows, for descriptive purposes, an example in which the plurality of base stations 102 are linearly arranged, there are various geographical positional relationships between the plurality of base stations 102.

As illustrated in Fig. 8, as the mobile station 100 moves, the data link is switched from the radio link 200C to the radio link 200D, which is indicated by a solid line. Further, while a radio link 200F is newly established between the mobile station 100 and the base station 102F, the radio link 200B, which was established in Fig. 4, is disconnected.

According to the embodiment described above, the data link that the mobile station 100 uses is selected from among the plurality of radio links already established between the mobile station 100 and the plurality of base stations 102. This makes it possible to shorten the time it takes for the mobile station 100 to switch from connecting to one base station 102 to connecting to another (i.e. to perform a handover), thus making it possible to reduce the occurrence of a communication disconnect that is entailed by a handover.

This in turn allows the mobile station 100 to perform a handover between base stations 102 with reduced occurrence of a communication disconnect. This further makes it possible to suppress an increase in the frequency of occurrence of a communication disconnect due to properties that a millimeter-wave band of radio waves has in association with communication distance and directivity (straightness).

Further, the plurality of base stations 102 that establish radio links with the mobile station 100 are not fixed in the base station system 101 but updated on the basis of a radio link quality between the mobile station 100 and each of a plurality of candidate base stations 102. Accordingly, for example, even in a case where a movement of the mobile station 100 has effected a change in radio environment, the occurrence of a communication disconnect that is entailed by a handover can be reduced.

Further, the plurality of radio links that are established between the mobile station 100 and the plurality of base stations 102, respectively, are for example shared (i.e. multiplexed) in a time-division scheme on the basis of CSMA/CA. Accordingly, the mobile station 100 does not need to include a plurality of transceiver-receivers corresponding to the plurality of radio links. The mobile station 100 can establish a radio link with each of the plurality of base stations 102 through one transceiver-receiver (e.g. the wireless communicator 105).

Further, in a case where a millimeter-wave band of frequencies is applied as the frequencies of the radio links 200, the radio links 200 are established using beamforming of the plurality of base stations 102 or beamforming of the mobile station 100 and the plurality of base stations 102 as described with reference to Fig. 5 or 6. This makes it possible to increase the success rate of establishment of the radio links 200.

Further, since a base station 102 that has received a beacon signal from the mobile station 100 is selected as a base station 102 that establishes a radio link with the mobile station 100, a base station 102 that does not receive a mobile station beacon signal can be prevented from performing a process for establishing a radio link. This makes it possible to improve the success rate of establishment of a radio link while reducing a wasteful process for establishing a radio link.

Although the aforementioned embodiment has been described by taking, as an example, a case where the number of base stations 102 is 6, the number of base stations 102 may be equal to or larger than 2 and less than 6 and may be equal to or larger than 7. Further, for example in Fig. 2, the base station control apparatus 103 does not need to receive (or collect) information (e.g. beacon reception results) from all of the plurality of base stations 102 but may receive information from some of the plurality of base stations 102.

For example, the base station control apparatus 103 may receive information from one of the plurality of base stations 102 which has received (or detected) a beacon signal transmitted by the mobile station 100. Since the base station control apparatus 103 does not need to communicate with a base station 102 that does not receive the beacon signal, the base station control apparatus 103 has its processing load reduced.

Further, for example, on the basis of the positional information of the mobile station 100, the base station control apparatus 103 may receive information from that one of the plurality of base stations 102 which is located within an area around the mobile station 100. The area around the mobile station 100 may be set by information indicating a range centered at the position of the mobile station 100.

The position of the mobile station 100 may be identified by information acquired using the GPS (Global Positioning System) or may be estimated on the basis of the signal received powers or RSSIs of the plurality of base stations 102.

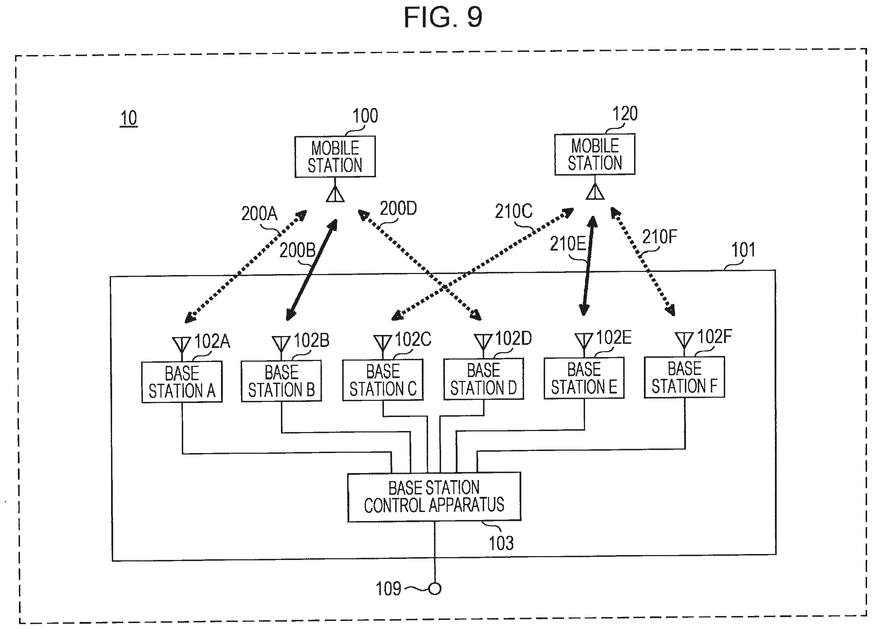

Further, the number of mobile stations 100 is not limited to 1, but there may be a plurality of mobile stations 100 in the wireless LAN system 10. Fig. 9 shows, as an example, an example of a state of establishment of radio links in a case where there are two mobile stations 100 and 120 in the wireless LAN system 10.

In the case of Fig. 9, the base station control apparatus 103 executes, on each of the mobile stations 100 and 120, the process or procedure described with reference to Figs. 2 to 8.

As a result, as shown in Fig. 9, for example, as for the mobile station 100, radio links 200A, 200B, and 200D are established between the mobile station 100 and the base stations A, B, and D, respectively, and the radio link 200B is allocated to a data link.

Meanwhile, as for the mobile station 120, radio links 210C, 210E, and 210F are established between the mobile station 120 and the base stations C, E, and F, respectively, and the radio link 210E is allocated to a data link.

The data links 200B and 210E may be of the same frequency (channel) or may be of different frequencies (channels) from each other.

Further, although the aforementioned embodiment (e.g. Figs. 5 and 6) has taken, as an example, a "passive scan" by which the mobile station 100, which operates as an AP, autonomously transmits a beacon signal, an "active scan" may be applied to the wireless LAN system 10 of the present embodiment.

For example, the mobile station 100 may transmit a beacon signal upon receiving a probe request signal(s) transmitted by any one or more of the plurality of base stations 102. While no probe request signal is being received, the mobile station 100 may wait in a sleep mode (or a power-saving mode) to receive a probe request signal. This allows the mobile station 100 to consume less electric power than in a case of autonomously and periodically transmitting a beacon signal by an active scan.

In a case where a flying object such as a drone is applied to the mobile station 100, the time during which movements can be made by flying can be extended by being able to reduce power consumption. Being able to extend the time during which movements can be made makes it possible to expand the range of movement of the drone 100, thus making it possible, for example, to expand a range of shooting of the camera mounted on the drone 100. This makes it possible to expand the range of shooting that can be covered by one drone 100.

Further, in an active scan, the base stations 102 that transmit probe requests may be not all but some of the plurality of base stations 102 that constitute the base station system 101.

For example, on the basis of the already-described position information of the mobile station 100, the base station control apparatus 103 may select, from among the plurality of base stations 102, a base station 102 that transmits a probe request signal.

For example, on the basis of the positional information of the mobile station 100, an area where the mobile station 100 is estimated to succeed in receiving a probe request signal in a case where it is transmitted (e.g. the area around the mobile station 100) may be identified. The base station control apparatus 103 may select, as a base station(s) 102 that transmit(s) a probe request signal(s), one or more base stations 102 located in the area thus specified.

A base station 102 that was not selected to transmit a probe request signal may shifts to a sleep mode (or a power-saving mode) either autonomously or under control of the base station control apparatus 103.

Further, in the aforementioned embodiment (e.g. Figs. 1 to 4 and Figs. 8 to 10), the base station control apparatus 103 may be provided in any one of the plurality of base stations 102. Further, some or all of the functions of the base station control apparatus 103 may be dispersedly provided in any two or more base stations 102.

Further, some or all of the functions of the base station control apparatus 103 may be dispersedly provided in the mobile station 100. For example, the selection of a data link may be conducted on the mobile station 100 side on the basis of the radio link quality of each radio link.

### Modification of the Embodiment

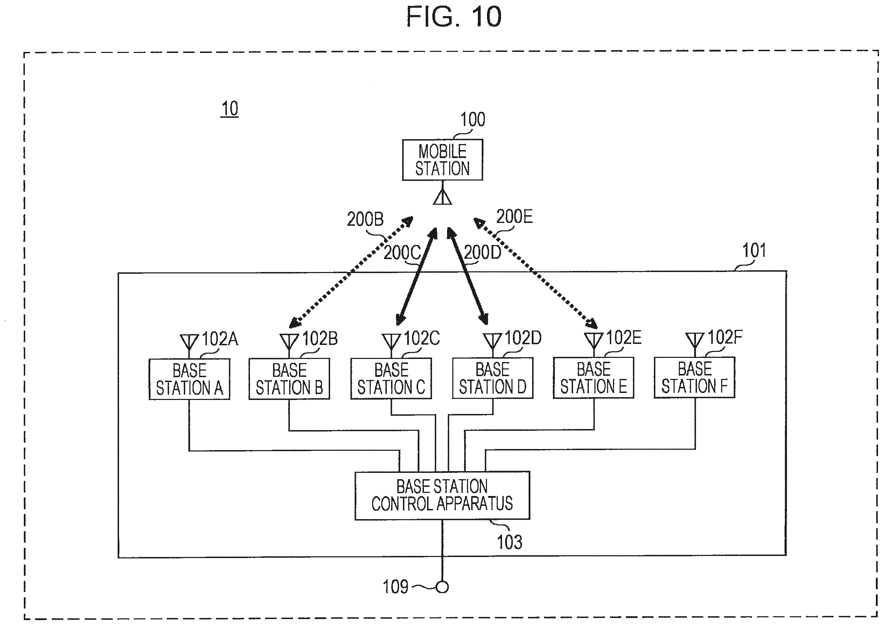

Fig. 10 is a diagram showing an example configuration of a wireless LAN system 10 according to a modification of the embodiment. Fig. 10 shows an example in which the two radio links 200C and 200D have been selected as data links from among the already-established radio links 200B, 200C, 200D, and 200E in step S207 described above with reference Fig. 5 or 6.

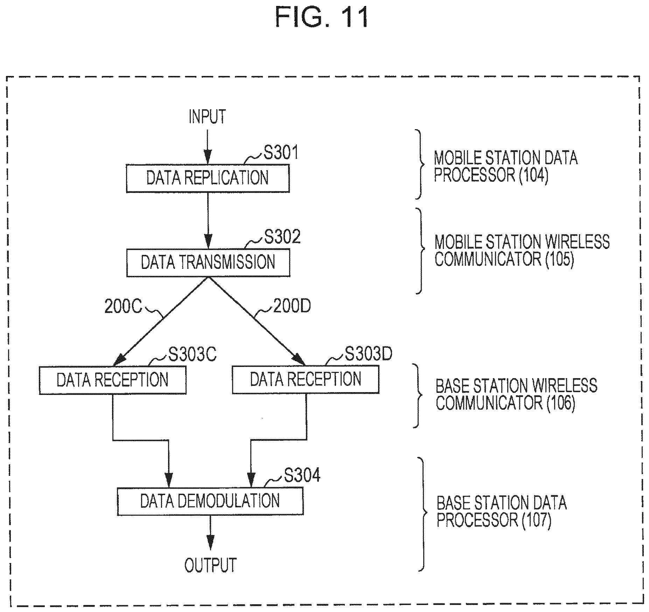

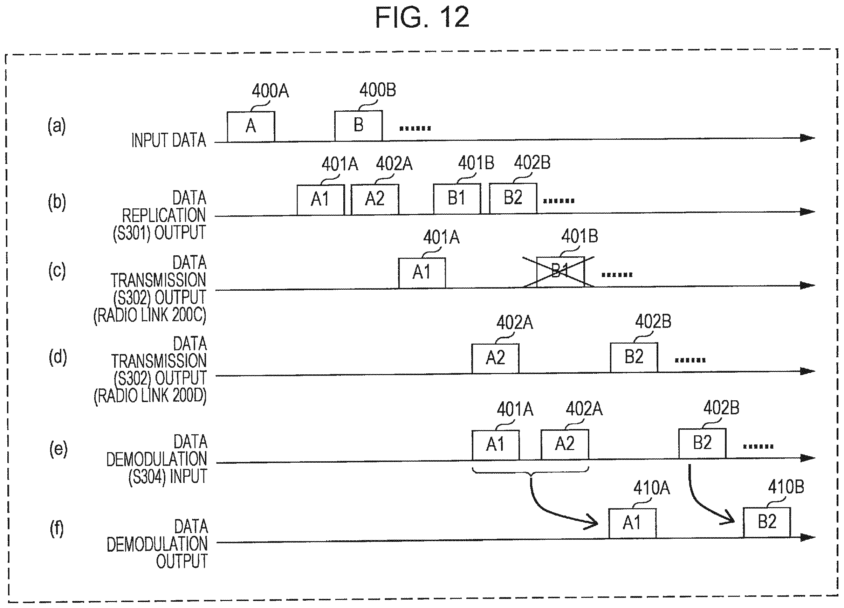

In the present modification, the process or procedure by which the radio links 200B, 200C, 200D, and 200E are established are as already described, for example, with reference to Figs. 2 to 6. In the following, an example of a data transmission process that involves the use of the two data links 200C and 200D is described with reference to Figs. 11 and 12.

Further, an example is described in which video data is transmitted in the form of packet data (hereinafter sometimes abbreviated as "packets") through the data links 200C and 200D. Continuous data such as video data is for example compressed and then divided into a plurality of packets for transmission. It should be noted that the video data is for example video data captured by the camera mounted on the mobile station 100. In other words, the present modification is described with attention paid to a process of transmitting video data in an upward direction from the mobile station 100 to the base stations 102.

Fig. 11 shows steps S301, S302, S303C, S303D, and S304 as an example of a data transmission process.

Step S301 (data replication) represents a step that is executed by the data processor 104 of the mobile station 100, and step S302 (data transmission) represents a step that is executed by the wireless communicator 105 of the mobile station 100.

Further, step S303C (data reception) represents a step that is executed by the wireless communicator 106 of the base station C corresponding to the data link 200C. Step S303D (data reception) represents a step that is executed by the wireless communicator 106 of the base station D corresponding to the data link 200D.

Step S304 (data demodulation) represents a step that is executed by the data processor 107 of the base station control apparatus 103.

As shown in Fig. 11, for example, the data processor 104 of the mobile station 100 divides video data into a plurality of packets and replicates each of the packets thus divided by the same number as the number of data links 200C and 200D (S301). The packets thus replicated are transmitted by the wireless communicator 105 of the mobile station 100 to the data links 200C and 200D, respectively (S302). In other words, identical packets are redundantly transmitted in an upward direction to the data links 200C and 200D.

The packet transmitted to the data link 200C is received by the wireless communicator 106 of the base station C (S303C), and the packet transmitted to the data link 200D is received by the wireless communicator 106 of the base station D (S303D).

The packets received by the base stations C and D are transferred from the base stations C and D to the base station control apparatus 103, respectively. The data processor 107 of the base station control apparatus 103 demodulates and decodes the packets received from the base stations C and D (S304).

One of the redundant packets received via the different data links 200C and 200D (i.e. the two packets having the same information) may be discarded. Alternatively, the redundant packets received via the different data links 200C and 200D may be combined. It should be noted that Fig. 11 omits to illustrate a coding and modulation process in the mobile station 100 that corresponds to demodulation and decoding processes in the base stations C and D.

Fig. 12 is a diagram chronologically showing packets in the data transmission process described above with reference to Fig. 11.

In (a) INPUT DATA of Fig. 12, 400A and 400B (or A and B) represent packets that are inputted to the data processor 104 of the mobile station 100. Each of the packets 400A and 400B are subjected to data replication by the data processor 104 of the mobile station 100 (which is equivalent to step S301 of Fig. 11).

For example, as shown in (b) DATA REPLICATION (S301) of Fig. 12, the packet 400A is replicated into packets 401A and 402A (A1 and A2) having the same information, the packet 400B is replicated into packets 401B and 402B (B1 and B2) having the same information. The packets A1, A2, B1, and B2 obtained by replication are outputted to the wireless communicator 105 of the mobile station 100.

As shown in (c) DATA TRANSMISSION (S302) OUTPUT (RADIO LINK 200C) of Fig. 12, the wireless communicator 105 of the mobile station 100 transmits either of the packets A1 and A2 (e.g. the packet A1) to the radio link 200C and transmits the other packet (e.g. the packet A2) to the radio link 200D.

As shown in (d) DATA TRANSMISSION (S302) OUTPUT (RADIO LINK 200D) of Fig. 12, the wireless communicator 105 of the mobile station 100 transmits either of the packets B1 and B2 (e.g. the packet B1) to the radio link 200C and transmits the other packet (e.g. the packet B2) to the radio link 200D.

Note here that the wireless communicator 105 for example transmits the individual packets to the radio links 200C and 200D in a time-division scheme under the CSMA access scheme. This prevents any two of the packets A1, A2, B1, and B2 flowing through the radio links 200C and 200D from overlapping (i.e. colliding with) each other in a time domain.

The packet transmission processes illustrated in (c) DATA TRANSMISSION (S302) OUTPUT (RADIO LINK 200C) and (d) DATA TRANSMISSION (S302) OUTPUT (RADIO LINK 200D) of Fig. 12 are equivalent to step S301 of Fig. 11. Further, (c) DATA TRANSMISSION (S302) OUTPUT (RADIO LINK 200C) of Fig. 12 shows an example in which the packet B1 of the packets A1 and B1 transmitted to the radio link 200C disappears (packet loss) during transmission to the radio link 200C and does not reach the base station C.

Therefore, the base station C receives the packet A1 of the packets A1 and B1 transmitted to the radio link 200C. The base station D receives both the packets A2 and B2 transmitted to the radio link 200D.

The base station C transmits, to the base station control apparatus 103, the packet A1 received from the radio link 200C, and the base station D transmits, to the base station control apparatus 103, the packets A2 and B2 received from the radio link 200D.

For example, as shown in (e) DATA DEMODULATION (S304) INPUT of Fig. 12, the data processor 107 of the base station control apparatus 103 receives the packet A1 from the base station C and the packets A2 and B2 from the base station D (which is equivalent to step S304 of Fig. 11).

As shown in (f) DATA DEMODULATION OUTPUT of Fig. 12, the data processor 107 of the base station control apparatus 103 discards either of the packets A1 and A2 having the same information (e.g. the packet A2, which was received later), demodulates and decodes the packet A, and outputs it. Alternatively, the data processor 107 may combine the packets A1 and A2 having the same information.

Further, as shown in (f) DATA DEMODULATION OUTPUT of Fig. 12, the data processor 107 demodulates and decodes the packet B2 from the base station D and outputs it.

As noted above, the modification of the embodiment makes it possible, for example, to improve the robustness of any radio link 200 against a packet loss by redundantly transmitting packets having the same information to the plurality of radio link 200. In other words, the modification of the embodiment makes it possible to reduce an error rate of data transmission by the radio links 200.

In a case of application where a millimeter-wave band of frequencies is used as the frequencies of the radio links 200, a packet loss tends to occur due to the interruption of a radio link 200 by a shield such as a human body, as a millimeter-wave band of radio waves is more highly straight than a microwave band of radio waves.

The aforementioned modification makes it possible to reduce deterioration in data transmission quality (e.g. video transmission quality) in a wireless environment where such a packet loss tends to occur.

Although the aforementioned modification has described a case where two radio links 200 are used for data communication, three or more radio links 200 may be used for data communication. Further, data processing that makes redundant packets that are transmitted to the plurality of radio links 200 is not limited to "DATA REPLICATION" illustrated in Figs. 11 and 12.

For example, in the data processing of the mobile station 100, an error rate of data communication may be reduced by adding a redundant packet to a transmission data stream under a coding scheme using an error correcting code.

Further, deterioration of the data transmission quality may be reduced by improving error resistance by lowering a transmission rate per radio link instead of making redundant packets that are transmitted to the plurality of radio links 200. Since the error rate can be lowered even with the same received power by lowering the transmission rate, the data transmission quality can be improved by distributing the packets to the plurality of radio links 200.

Further, the direction of data communication is not limited to the aforementioned direction (upward direction) from the mobile station 100 toward the base station control apparatus 103 but may be a direction (downward direction) from the base station control apparatus 103 toward the mobile station 100. In downward data communication, the aforementioned packet redundancy technology may be applied. For example, identical packets directed to the mobile station 100 may be redundantly transmitted from different base stations 102 to different radio links 200.

### Effects of the Embodiment Including the Modification

As noted above, the embodiment including the aforementioned modification makes it possible to establish a plurality of radio links 200 between a mobile station 100 (compatible with multiple links) mounted with one transceiver-receiver and a plurality of base stations 102 (compatible with a single link). This makes it possible to increase the speed of a handover by which the mobile station 100 switches from connecting to one base station 102 to connecting to another.

By applying the embodiment including the aforementioned modification as a non-limiting example to a millimeter-wave high-speed wireless LAN system, low-delay and high-quality radio transmission of high-definition video data can be achieved.

### Comparative Example

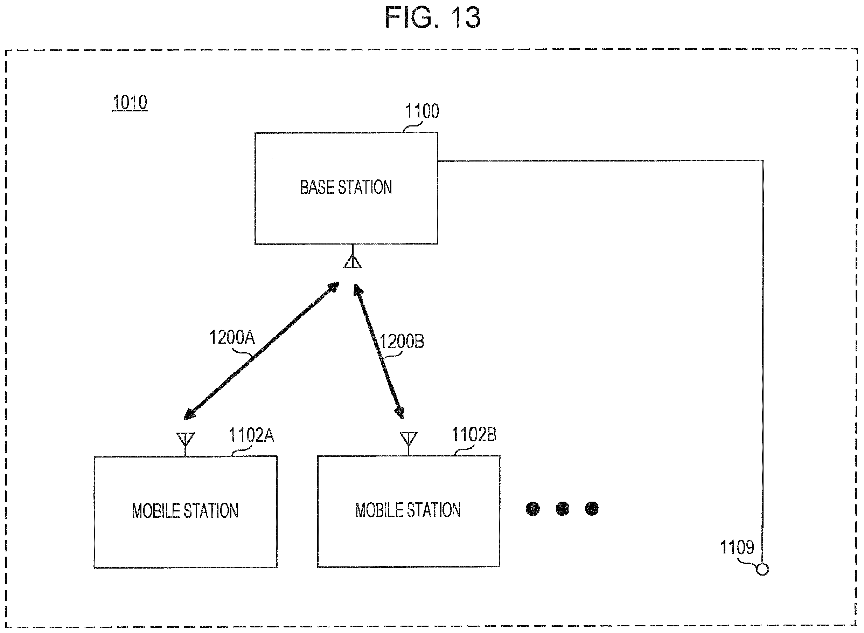

A comparative example with the embodiment including the aforementioned modification is described with reference to Fig. 13.

Fig. 13 is a diagram showing a configuration of a radio communication system 1010 according to the comparative example. As shown in Fig. 13, the radio communication system 1010 includes a base station 1100 and a plurality of mobile stations 1102A, 1102B, and .... A basic service set is constituted by one base station 1100 and a plurality of mobile stations 1102. It should be noted that the sign 1109 denotes an input-output terminal via which to transmit and receive data signals to and from an external network.

The base station 1100 can for example float in space by being attached to a balloon. The base station 1100 operates as an AP and therefore is capable of establishing a plurality of radio links, and each of the plurality of mobile stations 1102 operates as an STA and therefore is capable of establishing a single radio link.

Therefore, upon receiving a beacon signal transmitted from the base station 1100, each of the plurality of mobile stations 1102 transmits a connection request to the base station 1100 from which the beacon signal has been transmitted. By the mobile station 1102 receiving a connection permission in response to the connection request, a radio link is established between the mobile station 1102 and the base station 1100.

Fig. 13 uses solid allows to show an example in which radio links 1200A and 1200B have been established between the base station 1100 and the mobile stations 1102A and 1102B, respectively. The radio links 1200A and 1200B are used for the individual mobile stations 1102A and 1102B to transmit and receive data, respectively. In other words, the radio links 1200A and 1200B are data links that are individually used by the mobile stations 1102A and 1102B, respectively.

For example, each of the plurality of mobile stations 1102 transmits and receives data to and from the base station 1100 by exercising autonomous decentralized control of the timings of transmission and reception of data to and from the corresponding radio link 1102 on the basis of CSMA/CA.

Accordingly, in the comparative example illustrated in Fig. 13, each of the plurality of radio links 1200 thus established is a data link for each individual mobile station 1102.

On the other hand, in the embodiment described with reference to Figs. 1 to 12, the plurality of radio links 200 are established between the mobile station 100, which operates as an AP, and the plurality of base stations 102, which operate as STAs. At least one of the plurality of radio links 200 thus established is assigned to a data link.

Accordingly, in the embodiment described with reference to Figs. 1 to 12, some of the plurality of radio links 200 may not be selected as data links. A radio link 200 that is not selected as a data link may be maintained in an established state in preparation for a predicted handover of the mobile station 100. A radio link 200 that is not selected as a data link in preparation for a predicted handover of the mobile station 100 may be read as "predictive link" or "backup link" for descriptive purposes.

### Miscellaneous

Each functional block used in the description of the embodiment described above can be typically realized by an LSI such as an integrated circuit. These LSIs may be individually formed as one chip, or one chip may be formed so as to include a part or all of the functional blocks. The LSI here may be referred to as an IC (integrated circuit), a system LSI, a super LSI, or an ultra LSI depending on a difference in the degree of integration.

However, the technique of implementing an integrated circuit is not limited to the LSI and may be realized by using a dedicated circuit or a general-purpose processor. In addition, an FPGA (Field Programmable Gate Array) that can be programmed after the manufacture of the LSI or a reconfigurable processor in which the connections and the settings of circuit cells disposed inside the LSI can be reconfigured may be used.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred as a communication apparatus.

Some non-limiting examples of such communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A radio communication system according to the present disclosure includes: a mobile terminal apparatus that is capable of establishing a plurality of radio links that are shared in a time-division scheme; a plurality of base station apparatuses each of which establishes one radio link with the mobile terminal apparatus; and a control apparatus that selects, from among the plurality of radio links established, a data link that is used for data communication. In the radio communication system, the mobile terminal apparatus, using the data link selected, performs the data communication with one of the plurality of base station apparatus establishing the data link.

Further, in the radio communication system according to the present disclosure, the plurality of radio links established may be multiplexed on the basis of Carrier Sense Multiple Access/Collision Avoidance (CSMA/CA).

Further, in the radio communication system according to the present disclosure, in a case where a quality of a first data link is lower than a preset quality, the control apparatus may select a second data link from among the plurality of radio links established and switch the data link that is used for the data communication from the first data link to the second data link.

Further, in the radio communication system according to the present disclosure, the control apparatus may select two or more of the plurality of radio links established as data links, and the mobile terminal apparatus may redundantly or separately transmit data signals having identical information to the two or more data links, respectively.

Further, in the radio communication system according to the present disclosure, each of the plurality of radio links may be a millimeter-wave radio link and be established using beamforming of the plurality of base station apparatuses or beamforming of the mobile terminal apparatus and the plurality of base station apparatuses.

Further, in the radio communication system according to the present disclosure, the one of the plurality of base station may establish the radio link with the mobile terminal apparatus based on a reception result of a beacon signal transmitted by the mobile terminal apparatus.

Further, in the radio communication system according to the present disclosure, the one of the plurality of base station may establish the radio link with the mobile terminal apparatus based on positional information of the mobile terminal apparatus.

Further, a radio communication control method according to the present disclosure includes: establishing a plurality of radio links between a mobile terminal apparatus and a plurality of base station apparatuses, respectively, the mobile terminal apparatus being capable of establishing the plurality of radio links, the plurality of radio links being shared in a time-division scheme; selecting, from among the plurality of radio links established, a data link that is used for data communication; and using the data link selected, performing the data communication between the mobile terminal apparatus and one of the plurality of base station establishing the data link.

Further, a mobile terminal apparatus according to the present disclosure includes: a radio communication circuit that establishes, with a plurality of base station apparatuses, a plurality of radio links that are shared in a time-division scheme; and a processing circuit that, using a data link selected for data communication from among the radio links established, performs the data communication with one of the plurality of base station apparatus establishing the data link.

Further, a base station apparatus according to the present disclosure includes: a radio communication circuit that establishes one radio link with a mobile terminal apparatus that is capable of establishing a plurality of radio links that are shared in a time-division scheme; and a processing circuit that, in a case where the radio link established is selected as a data link that is used for data communication, performs the data communication with the mobile terminal apparatus using the data link.

Further, a control apparatus according to the present disclosure includes: a transmitting circuit that transmits, to a plurality of base station apparatuses, a request that a mobile terminal apparatus make one radio link, the mobile terminal apparatus being capable of establishing a plurality of radio links that are shared in a time-division scheme; a selection circuit that selects, from among the plurality of radio links established at the request, a data link that is used for data communication; and a processing circuit that processes a data signal in the data communication that is performed using the data link selected between the mobile terminal apparatus and one of the plurality of base station apparatus establishing the data link.

The present disclosure is suitable to a wireless LAN system including a mobile terminal apparatus and a plurality of base station apparatuses.

## Claims

1. A radio communication system comprising:
a mobile terminal apparatus that is capable of establishing a plurality of radio links that are shared in a time-division scheme;
a plurality of base station apparatuses each of which establishes one radio link with the mobile terminal apparatus; and
a control apparatus that selects, from among the plurality of radio links established, a data link that is used for data communication,
wherein the mobile terminal apparatus, using the data link selected, performs the data communication with one of the plurality of base station apparatus establishing the data link.

2. The radio communication system according to Claim 1, wherein the plurality of radio links established are multiplexed on the basis of Carrier Sense Multiple Access/Collision Avoidance (CSMA/CA).

3. The radio communication system according to Claim 1, wherein in a case where a quality of a first data link is lower than a preset quality, the control apparatus selects a second data link from among the plurality of radio links established and switches the data link that is used for the data communication from the first data link to the second data link.

4. The radio communication system according to Claim 1, wherein the control apparatus selects two or more of the plurality of radio links established as data links, and
the mobile terminal apparatus redundantly or separately transmits data signals having identical information to the two or more data links, respectively.

5. The radio communication system according to Claim 1, wherein each of the plurality of radio links is a millimeter-wave radio link and is established using beamforming of the plurality of base station apparatuses or beamforming of the mobile terminal apparatus and the plurality of base station apparatuses.

6. The radio communication system according to Claim 1, wherein the one of the plurality of base station establishes the radio link with the mobile terminal apparatus based on a reception result of a beacon signal transmitted by the mobile terminal apparatus.

7. The radio communication system according to Claim 1, wherein the one of the plurality of base station establishes the radio link with the mobile terminal apparatus based on positional information of the mobile terminal apparatus.

8. A radio communication control method comprising:
establishing a plurality of radio links between a mobile terminal apparatus and a plurality of base station apparatuses, respectively, the mobile terminal apparatus being capable of establishing the plurality of radio links, the plurality of radio links being shared in a time-division scheme;
selecting, from among the plurality of radio links established, a data link that is used for data communication; and
using the data link selected, performing the data communication between the mobile terminal apparatus and one of the plurality of base station establishing the data link.

9. A mobile terminal apparatus comprising:
a radio communication circuit that establishes, with a plurality of base station apparatuses, a plurality of radio links that are shared in a time-division scheme; and
a processing circuit that, using a data link selected for data communication from among the radio links established, performs the data communication with one of the plurality of base station apparatus establishing the data link.

10. A base station apparatus comprising:
a radio communication circuit that establishes one radio link with a mobile terminal apparatus that is capable of establishing a plurality of radio links that are shared in a time-division scheme; and
a processing circuit that, in a case where the radio link established is selected as a data link that is used for data communication, performs the data communication with the mobile terminal apparatus using the data link.

11. A control apparatus comprising:
a transmitting circuit that transmits, to a plurality of base station apparatuses, a request that a mobile terminal apparatus make one radio link, the mobile terminal apparatus being capable of establishing a plurality of radio links that are shared in a time-division scheme;
a selection circuit that selects, from among the plurality of radio links established at the request, a data link that is used for data communication; and
a processing circuit that processes a data signal in the data communication that is performed using the data link selected between the mobile terminal apparatus and one of the plurality of base station apparatus establishing the data link.
